Europäisches Patentamt

European Patent Office

Office européen des brevets

(11) Publication number: **0 647 869 A1**

# EUROPEAN PATENT APPLICATION

(21) Application number: **94113620.2**

(51) Int. Cl.6: **G02F 1/09**

(22) Date of filing: **31.08.94**

(30) Priority: **07.10.93 JP 251710/93**

(43) Date of publication of application:
**12.04.95 Bulletin 95/15**

(84) Designated Contracting States:
**DE FR GB**

(71) Applicant: **MITSUBISHI GAS CHEMICAL COMPANY, INC.**
**5-2, Marunouchi 2-chome**
**Chiyoda-Ku**
**Tokyo, 100 (JP)**

(72) Inventor: **Shirai, Kazushi, c/o Mitsubishi Gas Chem.Co.Inc.**
**Tokyo Lab.,**
**1-1, Niijuku 6-chome,**
**Katsushika-Ku**
**Tokyo 125 (JP)**
Inventor: **Takeda, Norio, c/o Mitsubishi Gas Chem.Co.Inc.**
**Tokyo Lab.,**
**1-1, Niijuku 6-chome,**
**Katsushika-Ku**
**Tokyo 125 (JP)**

(74) Representative: **Reinhard, Skuhra, Weise**
**Friedrichstrasse 31**
**D-80801 München (DE)**

(54) **Non-reciprocal optical device.**

(57) A non-reciprocal optical device comprising a Faraday device made of a rare-earth iron garnet single crystal which can be in a magnetically saturated condition of Faraday rotation angle without an external magnetic field. Since a permanent magnet is omitted, the size of optical isolator or optical circulator can be more reduced than before. In addition, since the number of parts of the optical isolator or the optical circulator is reduced, the fabrication cost thereof can be reduced.

FiG. 3

## Background of the Invention

### 1. Field of the Invention

The present invention relates to a non-reciprocal optical device such as an optical isolator or an optical circulator composed of a rare-earth iron garnet single crystal. More specifically, the present invention relates to an optical isolator or an optical circulator that does not use a permanent magnet.

### 2. Description of the Related Art

Since a rare-earth iron garnet single crystal that is for example yttrium iron garnet [$Y_3Fe_5O_{12}$) and a bismuth substituted rare-earth iron garnet single crystal [$(RBi)_3Fe_3O_{12}$, R is yttrium or a rare-earth element], where a portion of the rare-earth element is substituted with bismuth, have high transparent characteristic and large Faraday effect in near infrared region, they have been used and intensively developed for Faraday devices for non-reciprocal optical devices such as optical isolators and optical circulators and Faraday devices for optical magnetic field sensors for detecting the presence and/or the intensity of magnetic field.

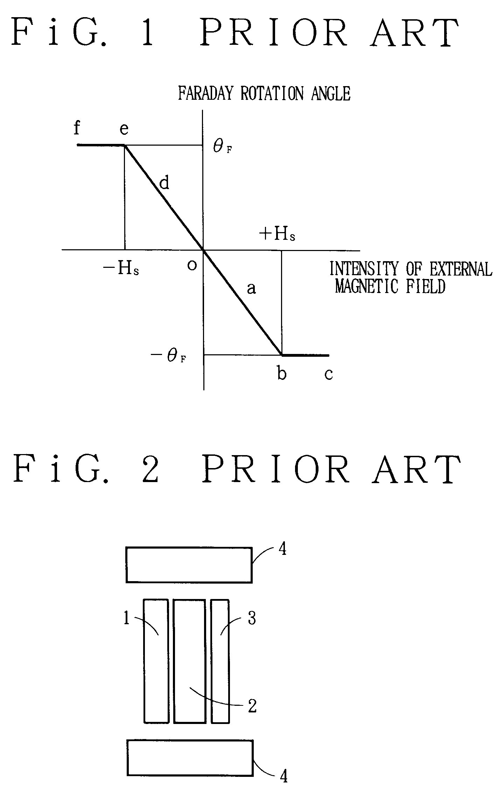

The Faraday effect is a kind of magneto-optical effect and refers to the phenomenon where a polarization plane of light that has transmitted through a material having Faraday effect, that is, a Faraday device (Faraday rotator) rotates. The rotation angle of the polarization plane is proportional to the intensity of the magnetization of the Faraday device as shown in Fig. 1.

In Fig. 1, when an external magnetic field is not applied, (namely, the intensity of the magnetic field is zero), the Faraday's rotation angle of the Faraday rotator is zero, namely present at the origin o.

When the external magnetic field is gradually strengthened, the absolute value ($\theta_F$ or $-\theta_F$, where clockwise rotation and counterclockwise rotation are normally denoted by + and -, respectively) of the Faraday's rotation angle gradually increases through path a or path d (path o -> a -> b or path o -> d -> e). When the intensity of the external magnetic field becomes a predetermined intensity [Hs], the Faraday rotation angle becomes a saturated value (saturated magnetic field, point b or point e in Fig. 1). When the intensity of the external magnetic field further increases, since the Faraday rotation angle has been already saturated, the Faraday rotation angle does not vary, with movement from point b to c or from point e to f.

When the intensity of the external magnetic field is gradually weakened, the Faraday rotation angle decreases through path c -> b -> a -> o or path f -> e -> d -> o. Thus, finally, since there becomes no influence due to the external magnetic field, the Faraday rotation angle becomes zero (namely, returning to the origin o).

When the rare-earth garnet single crystal used for an optical isolator or the like is magnetically unsaturated, extinction ratio that is one of the most important characteristics of the optical isolator and represents an index of isolation of light in reverse direction deteriorates. Accordingly, the rare-earth iron garnet single crystal for the optical isolator or the like is normally used under a saturated condition in the area above a saturating point shown in Fig. 1. Thus, an external magnetic field that exceeds the saturated magnetic field should be applied to the rare-earth iron garnet single crystal.

Fig. 2 is a schematic diagram showing the construction of an optical isolator. Reference numeral 1 is a polarizer composed of a rutile single crystal or the like. Reference numeral 2 is a Faraday rotator composed of a bismuth substituted rare-earth iron garnet single crystal or the like. Reference numeral 3 is an analyzer composed of a rutile single crystal or the like. Reference numeral 4 is a permanent magnet for magnetically saturating the Faraday rotator 2. The permanent magnet 4 is normally formed in a cylindrical shape to uniformly apply a magnetic field to the Faraday rotator 2.

A semiconductor laser used for optical communication or optical instrumentation has a serious drawback in that when transmitted light of the semiconductor laser is reflected by an edge surface of an optical fiber to return to the semiconductor laser, the output thereof becomes unstable. To prevent such a drawback, it is widely practiced to dispose an optical isolator on the light transmitting side of the semiconductor laser to isolate the reflected and returned light. In addition, the temperature of the semiconductor laser is kept constant by a Peltier device so as to keep the wave length of laser oscillation stable. In recent years, as the size of optical isolators has been decreased, an optical isolator has been integrated with a semiconductor laser as a semiconductor laser module so as to control the temperature of both the optical isolator and the semiconductor laser at the same time. This is because the characteristics of the optical isolator deteriorate in dependence on the variation of the temperature. Thus, an optical isolator integrated with a semiconductor laser should be as small as possible so as to reduce the load applied to a Peltier device.

The size of the optical isolator can be reduced by reducing the thickness of a polarizer, an analyzer, and/or a Faraday rotator. So far, inexpensive polarizing cube beam splitters had been used for polarizers and analyzers. The thickness of the polarizing cube beam splitter is at least 1 mm. Thus, it could not be used for reducing the size of the optical isolator. However, in recent years, glass type dichroic polarizers having high performance in spite of a very small thickness of 0.2 mm have been developed and contributed to reducing the size of the optical isolators. An example of such polarizers is POLARCORE made by Corning Company.

Yttrium iron garnet ($Y_3Fe_5O_{12}$) that is made by flux method have been conventionally used for a Faraday rotator. However, the thickness of the yttrium iron garnet used for a Faraday rotator needs to be approximately 1 mm, and the intensity of the saturated magnetic field (the intensity of the magnetic field for magnetically saturating it) needs to be large. Accordingly, there is a drawback that the size of a permanent magnet for magnetically saturating the Faraday rotator becomes large. To solve such a problem, bismuth substituted rare-earth iron garnet single crystal [$(RBi)_3Fe_5O_{12}$, R is yttrium and/or rare-earth element] where part of rare-earth element is substituted with bismuth, has been used for a Faraday rotator for an optical isolator. This is for the following two reasons. One reason is that since the Faraday effect of the bismuth substituted rare-earth iron garnet single crystal is several times higher than that of the yttrium iron garnet, the thickness of the former can be reduced to as thin as approximately 0.3 mm. The other reason is that since the intensity of the saturated magnetic field of the bismuth substituted rare-earth iron garnet single crystal is approximately half of that of the yttrium iron garnet, the size of the permanent magnet for magnetically saturating the Faraday rotator can be reduced. In addition, since the bismuth substituted rare-earth iron garnet single crystal can be made by liquid phase epitaxial method, which is suitable for quantitative fabrication, the fabrication cost of an optical isolator can be remarkably reduced.

As described above, optical isolators have been remarkably miniaturized by adopting very thin glass polarizing devices and bismuth substituted rare-earth iron garnet single crystals which can be thin because of large Faraday effect and which have small saturated magnetic field. However, when the optical isolator is integrated with the semiconductor laser, the size of the integrated product should be further reduced. Nevertheless, since the optical isolator has been basically constructed by containing a polarizer, an analyzer and a Faraday device in a cylindrical magnet, minituarization of the optical isolator just depends on the limit of minituarization of the permanent magnet. In addition, when the small optical isolator is fabricated, the step for disposing the polarizer, the analyzer, and the Faraday rotator in the permanent magnet is complicated. Further, since such parts are small , their handling is difficult and thereby the optical isolator is hard to be automatically fabricated. Thus, the fabrication cost of the optical isolator is high.

## Summary of the Invention

The present invention is a non-reciprocal optical device comprising a Faraday device made of a rare-earth iron garnet single crystal which can be in a magnetically saturated condition of Faraday rotation angle without an external magnetic field.

According to the present invention, since a permanent magnet is omitted, the size of optical isolator or optical circulator can be more reduced than before. In addition, since the number of parts of the optical isolator or the optical circulator is reduced, the fabrication cost thereof can also be reduced.

These and other objects, features and advantages of the present invention will become more apparent in light of the following detailed description of a best mode embodiment thereof, as illustrated in the accompanying drawings.

## Brief Description of Drawings

Fig. 1 is a graph showing a magnetic characteristic of a rare-earth iron garnet single crystal that does not have magnetic hysteresis;
Fig. 2 is a schematic diagram showing a basic construction of an optical isolator;
Fig. 3 is a graph showing a magnetic characteristic of a rare-earth iron garnet single crystal that has magnetic hysteresis;
Fig. 4 is a graph showing a magnetic characteristic of a rare-earth iron garnet single crystal that has large magnetic hysteresis;
Fig. 5 is a graph showing a magnetic characteristic of a rare-earth iron garnet single crystal that has square hysteresis due to very large magnetic hysteresis; and
Fig. 6 is a schematic diagram showing the construction of an optical isolator having a permanent magnet of compared example 1.

## Description of Preferred Embodiment

The inventors of the present invention intensively studied the size reduction and cost reduction of an optical isolator and found that when a particular rare-earth iron garnet single crystal having large magnetic hysteresis is used for a Faraday rotator, the optical isolator can be fabricated without need to use a permanent magnet that prevents the size reduction and cost reduction thereof. In addition, with further intensive evaluation, the inventors completed the present invention.

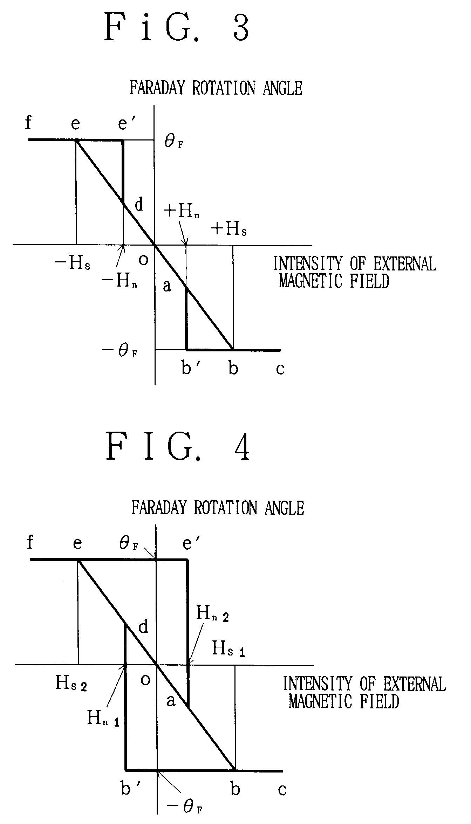

The Faraday rotation angle of the rare-earth iron garnet single crystal is linearly proportional to the intensity of the external magnetic field unless it is not saturated as shown in Fig. 1. However, $(GdBi)_3(FeGaAl)_5O_{12}$ represents a magnetic hysteresis as shown in Fig. 3. In other words, the dependence of the Faraday rotation angle on the intensity of the external magnetic field is denoted by a loop of path o -> a -> b -> c -> b -> b' -> a -> o. When the intensity of the external magnetic field is increased, it is denoted by a loop of path o -> a -> b -> c. When the intensity of the external magnetic field is decreased, it is denoted by a loop of path c -> b -> b' -> a -> o. Thus, the paths are different when the intensity of the external magnetic field is increased and when the intensity of the external magnetic field is decreased.

In Fig. 3, the magnetic field at points b and e is referred to as saturated magnetic field Hs, whereas the magnetic field at points b' and e' due to hysteresis of magnetizing characteristic is referred to as nucleus forming magnetic field Hn. The difference (Hs - Hn) between the saturated magnetic field Hs and the nucleus forming magnetic field Hn is the size of hysteresis. Now, for simplicity and easy understanding, assume that the saturated magnetic field Hs at point b is denoted by Hs1, the nucleus forming magnetic field Hn at point b' is denoted by Hn1, the saturated magnetic field Hs at point e is denoted by Hs2, and the nucleus forming magnetic field Hn at point e' is denoted by Hn2.

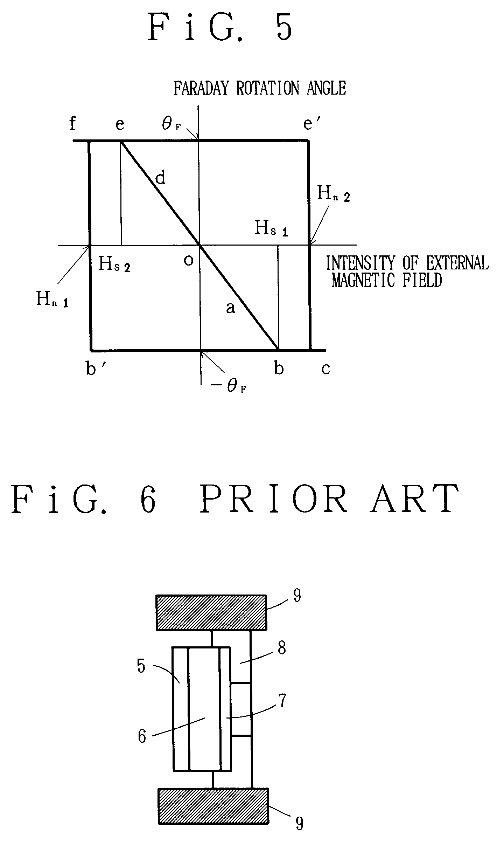

In the $(GdBi)_3(FeGaAl)_5O_{12}$ single crystal film that has large hysteresis, the nucleus forming magnetic field Hn1 extends in minus direction beyond the origin o (see Fig. 4). Further, the nucleus forming magnetic field Hn1 extends in minus direction beyond the saturated magnetic field Hs2. Thus, the $(GdBi)_3(FeGaAl)_5O_{12}$ single crystal has square-shaped hysteresis (see Fig. 5). Namely, once the $(GdBi)_3(FeGaAl)_5O_{12}$ single crystal has been saturated, the hysteresis thereof traces only a square-shaped loop. In this state, the intensity of the magnetic field necessary for saturating the rare-earth iron garnet single crystal is larger than the intensity of the original saturated magnetic field Hs of the rare-earth iron garnet single crystal.

When a magnetic field larger than the saturated magnetic field is applied to the Faraday rotator having the square-shaped hysteresis as shown in Fig. 5, unless a large inverse magnetic field is applied thereto, the saturated magnetization is maintained. Thus, an optical device such as an optical isolator whose Faraday rotator is magnetically saturated can be structured without using a permanent magnet.

Without using a permanent magnet, of course, the size of the optical isolator can be reduced. Further, the process for disposing the polarizer, the analyzer, and the Faraday rotator in the permanent magnet can be omitted. Thus, the fabrication process of the optical isolator can be easily automated. In addition, since the permanent magnet, which is expensive, and metal parts used for disposing the polarizer, the analyzer, and the Faraday rotator in the permanent magnet are not needed, the material cost of the optical isolator can be reduced.

In this embodiment, the optical isolator (in particular, a polarized wave dependent type optical isolator that is integrated with a semiconductor laser) was described. However, the present invention can be applied to other optical devices such as a polarized wave independent type optical isolator that is used between optical fibers and an optical circulator that causes optical signals transmitting through an optical fiber to branch in accordance with destinations. Thus, the same effects as the embodiment can be obtained for such devices.

The size of a conventional small optical isolator is 2.9 $\phi$ x 2 mm with the effective aperture (a portion where light is transmitted) thereof being 1 mm$\phi$. An example of the conventional small optical isolators is S0I-31S and S01-31MS, made by SHINETSUKAGAKU K. K. However, according to the present invention, since the permanent magnet is not needed, an optical isolator can be constructed by integrating a polarizer, a Faraday rotator, and an analyzer. Thus, a very small optical isolator with an external size of 1.5 mm x 1.5 mm and a thickness of 1 mm or less can be accomplished. When the effective aperture of the optical isolator is 0.8 mm$\phi$, the external size will be as small as 1.2 mm x 1.2 mm.

Since the size of the optical isolator is further reduced by embodying the present invention, the optical isolator can be disposed inside the cap of a semiconductor laser, whereas in the prior art the optical isolator was disposed outside the semiconductor laser. The cap is a glass window for protecting an laser emitting edge. Thus, the size of a semiconductor laser module that incorporates the optical isolator can be further reduced.

In the present invention, the magnetic saturation method of the Faraday rotator is not limited. In other words, the Faraday rotator may be magnetically saturated by approaching a permanent magnet thereto, by inserting the Faraday rotator into an electric magnet, or the like, which may be appropriately selected in dependence on the assembling method of the optical isolator. The intensity of the magnetic field applied to the Faraday rotator is preferably 1.5 times or more higher than that of the saturated magnetic field. This is because an intensity of a magnetic field near the intensity of the saturated magnetic field cannot frequently form the square-shaped hysteresis.

After the Faraday rotator is magnetically saturated, it is preferable not to approach it to a magnetic substance such as a permanent magnet. This is because when it is approached to a magnetic substance, there is a fear that the square-shaped hysteresis cannot be maintained, thereby deteriorating the characteristics of the optical isolator.

In embodying the present invention, the assembling method of the polarizer, the Faraday rotator and the analyzer is not limited. However, since the size of each part is around 10 mm x 10 mm, it is effective that they may be integrated by a bonding agent, etc. and then cut in required size.

(Example 1)

Lead oxide (PbO, 4N) of 3360 grams, bismuth oxide ($Bi_2O_3$, 4N) of 3920 grams, ferric oxide ($Fe_2O_3$, 4N) of 520 grams, boron oxide ($B_2O_3$, 5N) of 120 grams, gadolinium oxide ($Gd_2O_3$, 3N) of 57 grams, gallium oxide ($Ga_2O_3$, 3N) of 10.4 grams, and aluminum oxide ($Al_2O_3$, 3N) of 30.4 grams were placed in a crucible made of platinum with a volume of 1500 ml. The crucible was placed at a predetermined position of an upright type precise cylindrical electric furnace. The crucible was heated at 1000 °C and the materials therein were melted. The melted materials were properly stirred and equally mixed. The melted materials were cooled to 837 °C and a solution for growing bismuth substituted rare-earth iron garnet single crystal was obtained.

According to a conventional method, one surface of a (111) garnet single crystal [$(GdCa)_3$-$(GaMgZr)_5O_{12}$] substrate of 1.5 inch with a lattice constant of 12.496 ± 0.002 Å and a thickness of 480 $\mu$m was contacted with the surface of the solution. While the temperature of the solution was kept at 837 °C, a $(GdBi)_3(FeGaAl)_5O_{12}$ single crystal film (GdBiFeGaAlG single crystal film) with a thickness of 430 $\mu$m was obtained by epitaxial growing method.

Next, the GdBiFeGaAlG single crystal film was cut in the size of 10 mm x 10 mm and thereby four 10 mm x 10 mm pieces thereof were obtained. The substrates of the four 10 mm x 10 mm pieces were removed by abrasion. The film thicknesses of these four 10 mm x 10 mm pieces were adjusted by abrasion so that the Faraday rotation angle thereof became 45 degrees at a wave length of 1.31 $\mu$m. Thus, four 10 mm x 10 mm pieces with a film thickness of 374 $\mu$m and a Faraday rotation angle of 44.7 degrees were obtained. Hereinafter, these pieces are referred to as 10 mm x 10 mm pieces.

One of the 10 mm x 10 mm pieces was cut in the size of 1.5 mm x 1.5 mm. Any five of the 1.5 mm x 1.5 mm pieces were selected and their magnetic characteristics were measured. The measurement was performed in the following manner. One of the 1.5 mm x 1.5 mm pieces of the GdBiFeGaAlG single crystal film was placed at a center position of a magnetic field generating unit (magnet) having a coil made by MAGNETICS Company. While a magnetic field was being applied to the 1.5 mm x 1.5 mm piece of the GdBiFeGaAlG single crystal film, a laser beam of a semiconductor laser with a wave length of 1.31 $\mu$m was radiated thereto. The rotation angle of the polarization plane of the laser beam that had passed through the GdBiFeGaAlG single crystal film was measured, and on the basis of the measured rotation angle, the dependence of the Faraday rotation angle on the applied magnetic field was observed. As a result, a hysteresis curve similar to that shown in Fig. 5 was obtained. The average values of the magnetic characteristics of the GdBiFeGaAlG single crystal film were as follows.

Hs1 = 90 (Oe), Hs2 = -90 (Oe), Hn1 = -210 (Oe), Hn2 = 210 (Oe)

Anti reflection coatings with a refractive index of 1.53 were coated on both surfaces of one of the 10 mm x 10 mm pieces that had not been cut. This 10 mm x 10 mm piece and a glass polarizer (POLARCORE) with a size of 10 mm x 10 mm and a thickness of 0.2 mm were heated and bonded by an epoxy bonding agent. An anti reflection coating for air had been coated on one surface (opposite surface of the bonding surface of the 10 mm x 10 mm piece) of the glass polarizer. A glass analyzer (POLARCORE, 10 mm x 10 mm, 0.2 mm thick) was contacted with the opposite surface of the 10 mm x 10 mm piece, where the glass polarizer (POLARCORE) had not been disposed, by the epoxy type bonding agent. An antireflection coating for air had been coated on one surface (the opposite side of the bonding surface of the 10 mm x 10 mm piece) of the glass analyzer.

The integrated product of the glass polarizer, the 10 mm x 10 mm piece and the glass analyzer was placed at the center of the magnetic field generating unit (magnet) having the coil made by MAGNETICS Company. While a magnetic field of 2000 Oe was being applied, the laser beam of the semiconductor laser with the wave length of 1.31 $\mu$m was radiated to the integrated product of the glass polarizer, the 10 mm x 10 mm piece and the glass analyzer, and the transmitted light was monitored. While the transmitted light was being monitored, the intensity of the transmitted light varied by rotating the analyzer side by means of a rotating jig. When the lowest intensity of the transmitted light was observed, the jig on the analyzer side was fixed and the integrated product of the glass polarizer, the 10 mm x 10 mm piece and the glass analyzer was heated by a dryer so as to solidify the bonding agent.

After the bonding agent was solidified, the integrated product of the glass polarizer, the 10 mm x 10 mm piece and the glass analyzer was cut in the size of 1.5 mm x 1.5 mm. Any five of the 1.5 mm x 1.5 mm pieces were selected and then the insertion loss and the extinction ratio were measured by a laser beam of the semiconductor laser with the wave length of 1.31 $\mu$m. As a result, the insertion loss was 0.14 dB (average value) and the extinction ratio was 38.8 dB (average value).

(Comparison 1)

Lead oxide (PbO, 4N) of 3150 grams, bismuth oxide ($Bi_2O_3$, 4N) of 3600 grams, ferric oxide ($Fe_2O_3$, 4N) of 475 grams, boron oxide ($B_2O_3$, 5N) of 130 grams, terbium oxide ($Tb_4O_7$, 3N) of 20 grams, and holmium oxide ($Ho_2O_3$, 3N) of 32 grams were placed in a crucible made of platinum with a volume of 1500 ml. The crucible was placed at a predetermined position of an upright type precise cylindrical electric furnace. The crucible was heated at 1000 °C and the materials therein were melted. The melted materials were properly stirred and equally mixed. The melted materials were cooled to 781 °C and a solution for growing bismuth substituted rare-earth magnetic garnet single crystal was obtained.

According to a conventional method, one surface of a (111) garnet single crystal [$(GdCa)_3$-$(GaMgZr)_5O_{12}$] substrate of 1.5 inch with a lattice constant of 12.496 ± 0.002 Å and a thickness of 480 $\mu$m was contacted with the surface of the solution. While the temperature of the solution was kept at 781 °C, a $(HoTbBi)_3Fe_5O_{12}$ single crystal film (HoTbBiFeG single crystal film) was obtained by epitaxial growing method.

Next, the HoBiFeG single crystal film was cut in the size of 10 mm x 10 mm and thereby four 10 mm x 10 mm pieces thereof were obtained. The substrates of the four 10 mm x 10 mm pieces were removed by abrasion. The film thicknesses of these four 10 mm x 10 mm pieces were adjusted by abrasion so that the Faraday rotation angle thereof became 45 degree at a wave length of 1.31 $\mu$m. Thus, four 10 mm x 10 mm pieces with a film thickness of 228 $\mu$m and a Faraday's rotation angle of 45.1 degrees were obtained.

One of the 10 mm x 10 mm pieces of the HoTbBiFeG single crystal film was cut in the size of 1.5 mm x 1.5 mm. Any five of the 1.5 mm x 1.5 mm pieces were selected and their magnetic characteristics were measured. The measurement was performed in the same manner as the example 1.

As a result, a magnetic characteristic curve that does not have hysteresis at all as shown in Fig. 1 was obtained. The average values of the magnetic characteristics of the HoTbBiFeG single crystal film were as follows.

Hs1 = 1080 (Oe), Hs2 = -1080 (Oe), Hn1 = 1080 (Oe), Hn2 = -1080 (Oe)

The integrated product of the glass polarizer, the 10 mm x 10 mm piece and the glass analyzer was fabricated in the same manner as the example 1 except that the HoTbBiFeG single crystal film was used. The integrated product was cut in the size of 1.5 mm x 1.5 mm. Any five of the 1.5 mm x 1.5 mm pieces were selected and the insertion loss and the extinction ratio were measured by the laser beam of the semiconductor laser with the wave length of 1.31$\mu$m. As a result, the insertion loss was 4.2 dB (average value) and the extinction ratio was 0.3 dB (average value).

Thereafter, the 1.5 mm x 1.5 mm piece was fastened to a metal jig and contained in a cylindrical permanent magnet. In other words, the conventional optical isolator was formed (see Fig. 6). The insertion loss and the extinction ratio were measured by the laser beam of the semiconductor laser with a wavelength of 1.31 $\mu$m. As a result, the insertion loss was 0.11 dB (average value) and the extinction ratio was 39.5 dB (average value).

Although the present invention has been shown and described with respect to a best mode embodiment thereof, it should be understood by those skilled in the art that the foregoing and various other changes, omissions, and additions in the form and detail thereof may be made therein without departing from the spirit and scope of the present invention.

**Claims**

1. A non-reciprocal optical device comprising a Faraday device made of a rare-earth iron garnet single crystal which can be in a magnetically saturated condition of Faraday rotation angle without an external magnetic field.

2. A non-reciprocal optical device as recited in claim 1 wherein said rare-earth iron garnet single crystal has square-shape magnetic hysteresis characteristic.

3. A non-reciprocal optical device as recited in claim 1 or 2 wherein said rare-earth iron garnet single crystal is a $(GdBi)_3(FeGaAl)_5O_{12}$ single crystal.

# FiG. 1 PRIOR ART

FARADAY ROTATION ANGLE

$\theta_F$

$+H_s$

$-H_s$

o

$-\theta_F$

INTENSITY OF EXTERNAL MAGNETIC FIELD

f  e  d  a  b  c

# FiG. 2 PRIOR ART

4

1  3

2

4

# F i G. 3

FARADAY ROTATION ANGLE

INTENSITY OF EXTERNAL
MAGNETIC FIELD

# F I G. 4

FARADAY ROTATION ANGLE

INTENSITY OF EXTERNAL
MAGNETIC FIELD

# F i G. 5

# F i G. 6 PRIOR ART

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | EP-A-0 352 002 (HEWLETT-PACKARD)<br>* page 4; table A * | 1,3 | G02F1/09 |
| A | PATENT ABSTRACTS OF JAPAN<br>vol. 10, no. 169 (P-468) 14 June 1986<br>& JP-A-61 020 926 (NIPPON DENKI) 29 January 1986<br>* abstract * | 1,3 | |

TECHNICAL FIELDS SEARCHED (Int.Cl.6)

G02F

The present search report has been drawn up for all claims

| Place of search | Date of completion of the search | Examiner |
|---|---|---|
| THE HAGUE | 5 December 1994 | MALIC, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)